# EUROPEAN PATENT APPLICATION

(11) **EP 4 641 458 A1**
(43) Date of publication of application: **29.10.2025**
(21) Application number: 22969175.3
(22) Date of filing: 20.12.2022
(51) Int. Cl.: G06Q 10/0631, G06Q 10/109, G06Q 30/0645, G06Q 50/02

(54) **SCHEDULING SUPPORT SYSTEM AND SCHEDULING SUPPORT METHOD**

(71) Applicant: Hitachi, Ltd., Tokyo 100-8280 (JP)
(72) Inventor: YASUGAHIRA, Yusuke, Tokyo 100-8280 (JP); UCHIGAITO, Hiroshi, Tokyo 100-8280 (JP); TAKEMOTO, Takashi, Tokyo 100-8280 (JP); OKAMOTO, Mamoru, Tokyo 100-8280 (JP); TERADA, Keisuke, Tokyo 100-8280 (JP)
(74) Representative: Mewburn Ellis LLP
(86) International application number: PCT/JP2022/046947
(87) International publication number: WO 2024/134787

(57) **Abstract**

In a schedule formulation aiding system, an input unit receives, for each of the plurality of jobs, an input of a job execution period serving as a temporal constraint in scheduling the jobs, geographic information indicating a position where the resource is used for the job, resource information related to a plurality of the resources for executing the job, and job information including a temporal reward distribution that is dependent on timing of job execution; a processing unit is configured to create a tentative job set enabling a job execution time required for execution of the jobs to fall within the job execution period, based on the job information and the resource information, and to determine a subset of jobs enabling greater reward to be achieved, based on the temporal reward distribution, the job execution period, the geographic information, and the resource information; and an output unit outputs the determined subset of jobs.

## Description

### Technical Field

The present invention relates to a system and a method for aiding preparation of plans.

### Background Art

With the shift toward increased use of smart agricultural machinery and electrification of agricultural machinery in pursuit of the decarbonized society, machinery costs are increasing, and therefore there is a need for systems for improving the efficiency of agriculture as well as minimizing initial investments. It is also expected that a business model for encouraging farmers to invest in smart agricultural machinery will face difficulties in the future, so there is a demand for spreading services that maximize the utilization rate of machinery through leasing and sharing.

As a background art of this technical field, the following conventional technology is known. Patent Literature 1 (JP 2022-63967 A) discloses an agriculture aiding system including: a farm land selection step of selecting farm lands; a route calculation step of calculating a travelling route; a travel time calculation step of calculating a travel time required in travelling the route; a farming time calculation step of calculating farming time; an off-farm working time calculation step of calculating an off-farm working time such as material-supplying working time and for loading and unloading of work machinery; and a returning route and time calculation step of calculating a returning route and a returning time, in which a cumulative sum of the travel time calculated in the travel time calculation step, the farming time calculated in the farming time calculation step, the returning time calculated in the returning route and time calculation step, and the off-farm working time calculated in the off-farm working time calculation step is obtained, and the farm lands to be worked on are calculated in such a manner that the cumulative sum of the working time fall within an available working time per day.

### Citation List

### Patent Literature

PTL 1: JP 2022-63967 A

### Summary of Invention

### Technical Problem

When agricultural machinery is to be shared within a region, increasing equipment costs resulting from the recent shift toward smart agricultural machinery and electrification become a major obstacle for making initial investments in a service. In such a situation, it is important to increase the utilization rate of the equipment invested, and to increase productivity with respect to the cost invested. In order to achieve this goal, it is necessary to prepare efficient work plans, but a large number of complex factors including spatial conditions such as travelling between working locations or the scale of farms, temporal conditions such as an appropriate season for work, and uncertainties such as weather conditions and human factors, need to be taken into consideration, compared with those required in sharing of ordinary commodities. For providers of such sharing services, it is important, from the viewpoint of operations, to estimate the processing capabilities of owned resources, and provide the services within the processing capabilities, in the midst of such complexities.

Patent Literature 1 discloses a method for calculating a work plan to be implemented by an agricultural corporation, in consideration of travel time, working time, and the like of one worker, for agricultural work for which appropriate seasons are limited. To share agricultural machinery assuming a plurality of pieces of agricultural machinery and a plurality of workers (or a plurality of agricultural corporations), simply taking only the time into consideration is not sufficient.

Therefore, the present invention addresses the needs for accepting offers for job contracts with the requests of users reflected, by scheduling of resources in a manner enabling greater reward to be achieved, and an object of the present invention is to solve this problem through optimization using a temporal reward distribution.

### Solution to Problem

A representative example of the invention disclosed in the present application is as follows. That is, a schedule formulation aiding system that formulates a schedule for executing a plurality of jobs using a resource, the schedule formulation aiding system including a computer including an arithmetic device executing predetermined processing, and a storage device connected to the arithmetic device, the schedule formulation aiding system including: an input unit by which the arithmetic device receives information input to the schedule formulation aiding system; a processing unit by which the arithmetic device executes scheduling of the plurality of jobs; and an output unit configured to output a result of processing executed by the processing unit, in which the input unit receives, for each of the plurality of jobs, an input of a job execution period serving as a temporal constraint in scheduling the jobs, geographic information indicating a position where the resource is used for the job, resource information related to a plurality of the resources for executing the job, and job information including a temporal reward distribution that is dependent on timing of job execution, and the processing unit is configured to: create a tentative job set enabling a job execution time required for execution of the jobs to fall within the job execution period, based on the job information and the resource information; and determine a subset of jobs enabling greater reward to be achieved, based on the temporal reward distribution, the job execution period, the geographic information, and the resource information, and the output unit is configured to output the determined subset of jobs.

### Advantageous Effects of Invention

According to one aspect of the present invention, with job execution plans that are spatially and temporally optimized, the utilization rate of owned resources can be improved. Problems, configurations, and advantageous effects other than those described above will become clear in the following description of the embodiments.

### Brief Description of Drawings

[FIG. 1] FIG. 1 is a diagram illustrating a physical configuration of a schedule formulation aiding system according to an embodiment of the present invention.
[FIG. 2] FIG. 2 is a flowchart of processing executed by the schedule formulation aiding system according to the embodiment of the present invention.
[FIG. 3] FIG. 3 is a diagram outlining an operation of the schedule formulation aiding system according to the embodiment of the present invention.
[FIG. 4] FIG. 4 is a diagram illustrating an example of job execution period information according to the embodiment of the present invention.
[FIG. 5] FIG. 5 is a diagram illustrating an example of geographic information according to the embodiment of the present invention.
[FIG. 6] FIG. 6 is a diagram illustrating an example of owned resource information according to the embodiment of the present invention.
[FIG. 7] FIG. 7 is a diagram illustrating an example of job information according to the embodiment of the present invention.
[FIG. 8A] FIG. 8A is a diagram illustrating a pattern of a temporal constraint imposed by reward according to the embodiment of the present invention.
[FIG. 8B] FIG. 8B is a diagram illustrating a pattern of a temporal constraint imposed by the reward according to the embodiment of the present invention.
[FIG. 8C] FIG. 8C is a diagram illustrating a pattern of a temporal constraint imposed by the reward according to the embodiment of the present invention.
[FIG. 9] FIG. 9 is a diagram illustrating an example of a priori information for uncertainty factors, according to the embodiment of the present invention.
[FIG. 10] FIG. 10 is a diagram illustrating an example of the a priori information for uncertainty factors, according to the embodiment of the present invention.
[FIG. 11] FIG. 11 is a diagram illustrating an example of ascertained data input from outside, according to the embodiment of the present invention.
[FIG. 12] FIG. 12 is a detailed flowchart of job set optimization processing (S102) according to the embodiment of the present invention.

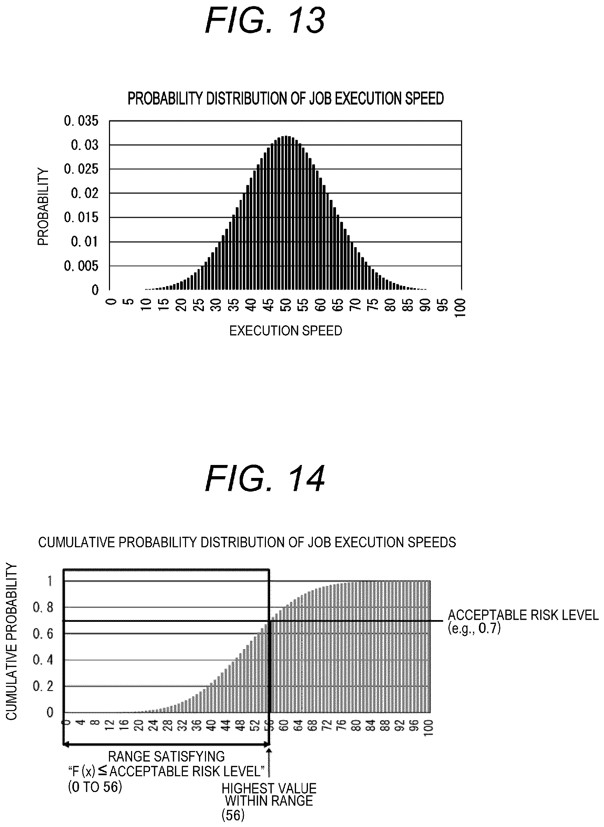

[FIG. 13] FIG. 13 is a diagram illustrating a probability distribution of job execution speed, according to the embodiment of the present invention.
[FIG. 14] FIG. 14 is a diagram illustrating a cumulative probability distribution F(x) of the job execution speed, according to the embodiment of the present invention.
[FIG. 15] FIG. 15 is a diagram outlining the job set optimization processing (S102) according to the embodiment of the present invention.
[FIG. 16] FIG. 16 is a detailed flowchart of schedule calculation processing (S103) according to the embodiment of the present invention.
[FIG. 17] FIG. 17 is a diagram outlining the schedule calculation processing (S103) according to the embodiment of the present invention.
[FIG. 18] FIG. 18 is a flowchart of presence-of-new-data determination processing (S106) according to the embodiment of the present invention.
[FIG. 19] FIG. 19 is a diagram illustrating a graph in which space information is visualized, according to the embodiment of the present invention.
[FIG. 20] FIG. 20 is a diagram illustrating statistical information of jobs and the amount of tasks, according to the embodiment of the present invention.
[FIG. 21] FIG. 21 is a diagram illustrating spatial timeline information of behaviors of each resource according to the embodiment of the present invention.

### Description of Embodiments

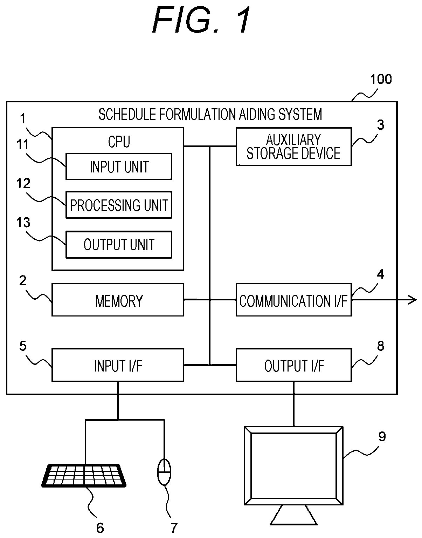

FIG. 1 is a diagram illustrating a physical configuration of a schedule formulation aiding system 100 according to an embodiment. In this embodiment, a job is a unit of work, and examples of a job include harvesting a crop and spraying pesticide. Furthermore, in this embodiment, a task is a specific piece of work included in the job, and examples of a task include a task of picking one fruit, a task of harvesting a certain area of rice, and a task of spraying pesticide to a certain area. A job including a task is considered finished when the work corresponding to the task is done by a specified amount.

The schedule formulation aiding system 100 according to this embodiment is implemented as a computer including a processor (CPU) 1, a memory 2, an auxiliary storage device 3, and a communication interface 4.

The processor 1 executes a program stored in the memory 2. It is also possible to cause another arithmetic device (such as a hardware-based arithmetic device by such as FPGA and ASIC) to execute a part of processing performed by a program that is executed by the processor 1. In the processor 1, an input unit 11, a processing unit 12, and an output unit 13 are caused to operate, by executing the program. The input unit 11 receives data input to the schedule formulation aiding system 100. The processing unit 12 executes various arithmetic operations to be performed by the schedule formulation aiding system 100. The output unit 13 generates data for outputting the result of arithmetic operations executed by the schedule formulation aiding system 100.

The memory 2 includes a ROM that is a nonvolatile storage element and a RAM that is a volatile storage element. The ROM stores therein an invariant program (e.g., BIOS), for example. The RAM is a high-speed volatile storage element, such as a dynamic random access memory (DRAM), and temporarily stores therein a program executed by the processor 1 and data used in executing the program.

The auxiliary storage device 3 is, for example, a large-capacity and nonvolatile storage device such as a magnetic storage device (HDD) or a flash memory (SSD), and stores therein a program executed by the processor 1 and data used in executing the program. In other words, a program is read from the auxiliary storage device 3, loaded onto the memory 2, and executed by the processor 1.

The communication interface 4 is a network interface device that controls communication with other devices, in accordance with a predetermined protocol.

The schedule formulation aiding system 100 may have an input interface 5 and an output interface 8. The input interface 5 is an interface to which the keyboard 6, the mouse 7, and the like are connected, and that receives inputs from the user. The output interface 8 is an interface to which the display device 9, a printer, and the like are connected, and that outputs the result of execution of a program in a format that is visually recognizable by a user. Note that the input interface 5 and the output interface 8 may be provided by a terminal connected to the schedule formulation aiding system 100 via a network.

The program executed by the processor 1 is provided to the schedule formulation aiding system 100 via a removable medium (e.g., a CD-ROM or a flash memory) or over a network, and is stored in the nonvolatile auxiliary storage device 3 that is a non-transitory storage medium. Therefore, the schedule formulation aiding system 100 may have an interface for reading data from a removable medium.

The schedule formulation aiding system 100 is a computer system built physically on one computer or a plurality of logically or physically configured computers, and may also operate using a single thread or a plurality of threads on the same computer, or operate on a virtual computer built on a plurality of physical computer resources. Units included in the schedule formulation aiding system 100 may operate on different computers.

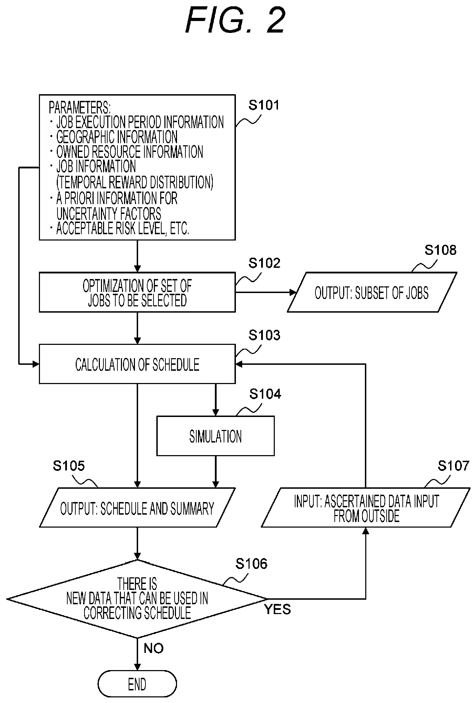

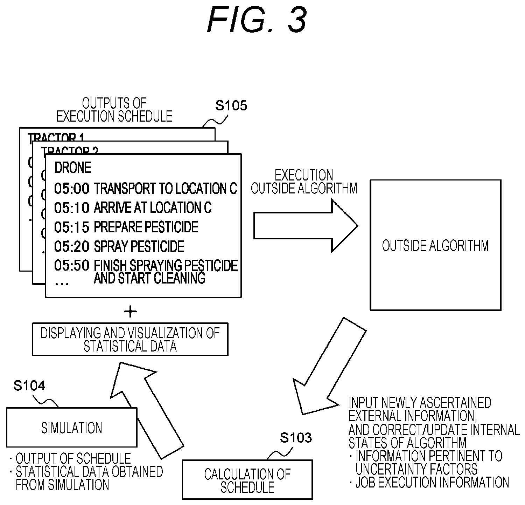

FIG. 2 is a flowchart of processing executed by the schedule formulation aiding system 100 according to this embodiment, and FIG. 3 is a diagram outlining an operation of the schedule formulation aiding system 100.

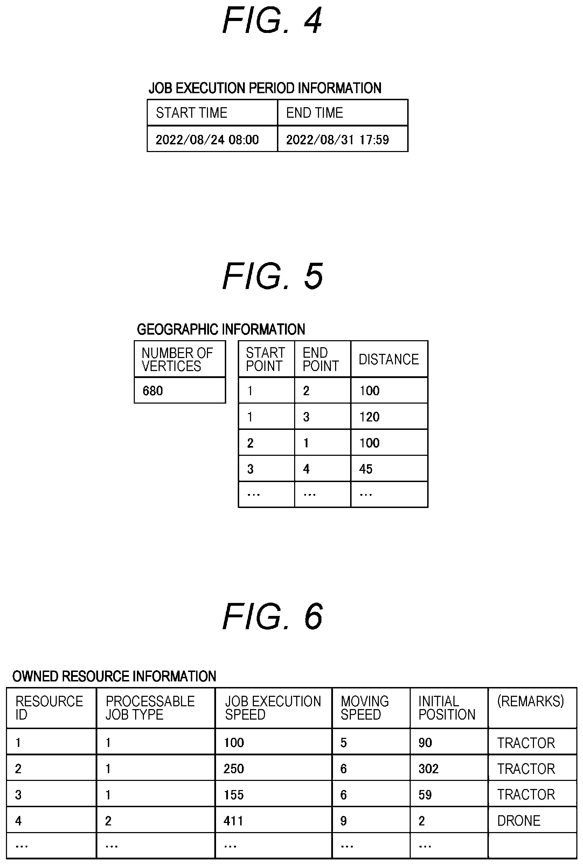

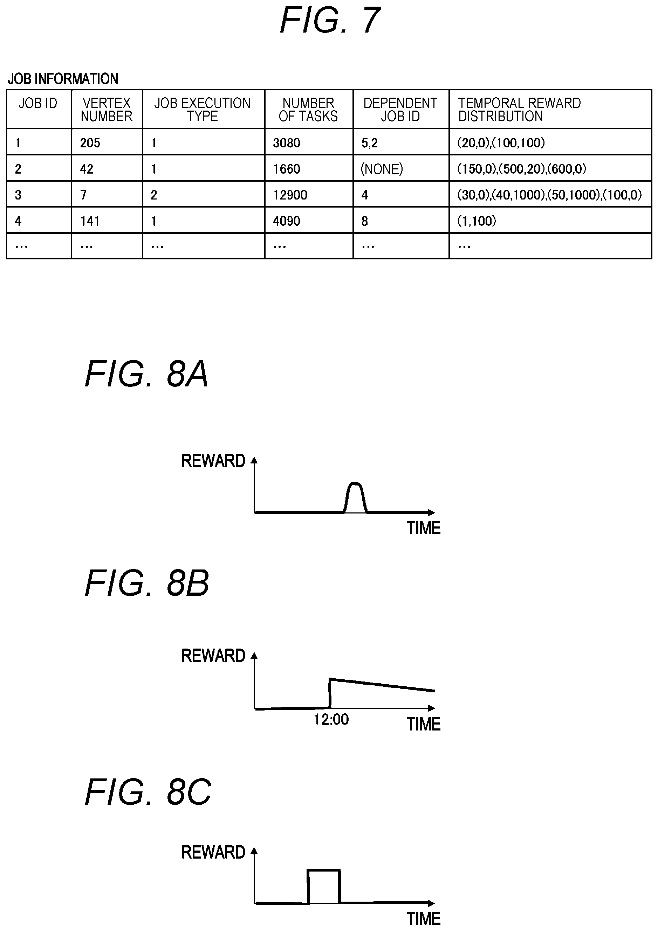

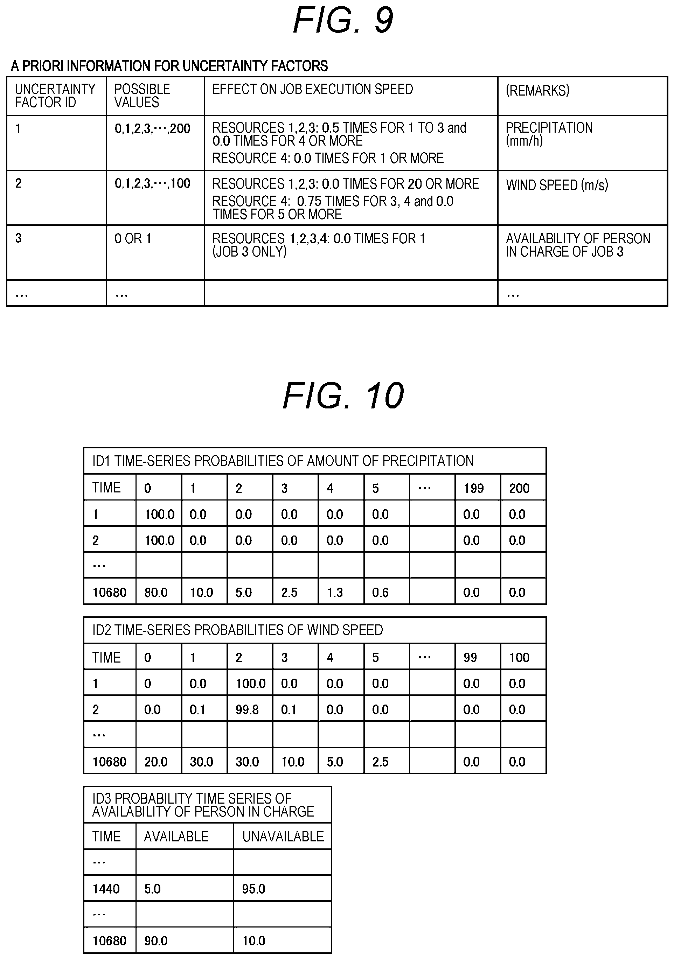

To begin with, the input unit 11 receives an input of parameters used for calculating a schedule (S101). Examples of the parameters to be input include job execution period (see FIG. 4), geographic information (see FIG. 5), owned resource information (see FIG. 6), job information (see FIG. 7), temporal reward distribution (see FIG. 7), a priori information for uncertainty factors (see FIG. 9), and acceptable risk level (see FIG. 10).

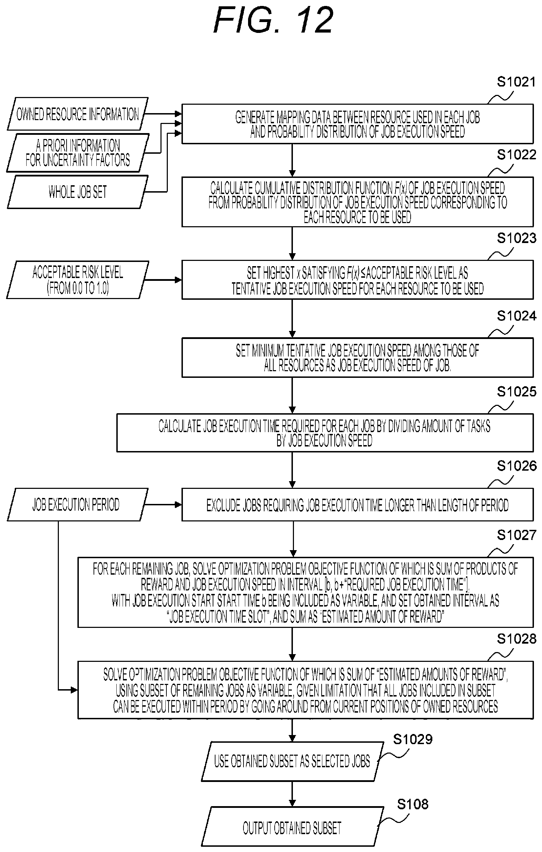

The processing unit 12 then optimizes a set of jobs to be selected (S102). This job set optimization processing will be described later in detail with reference to FIG. 12. The selected set of jobs is output for display on the screen (S108).

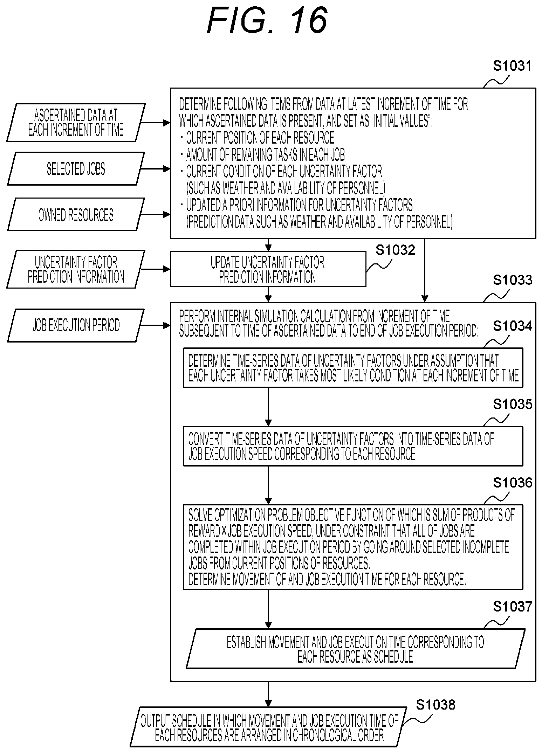

Using the input parameters, the processing unit 12 then calculates a schedule of resources for which a plan is to be prepared (S103). The schedule calculation processing will be described later in detail with reference to FIG. 16.

The processing unit 12 then runs simulations using the calculated schedule, as necessary, and calculates optimization indexes such as reward (S104).

The output unit 13 then outputs the calculated schedule and a summary of the calculated optimization indexes (S105).

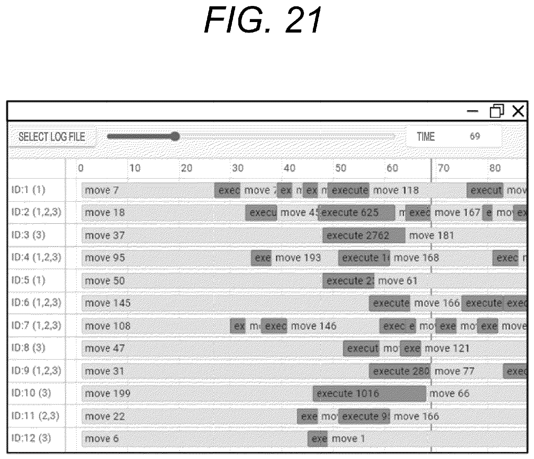

The processing unit 12 then determines whether there is new data that can be used in correcting the schedule (S106). This presence-of-new-data determination processing (S106) will be described later in detail with reference to FIG. 21.

If there is no new data that can be used in correcting the schedule, because the calculated schedule is optimal, the processing is ended.

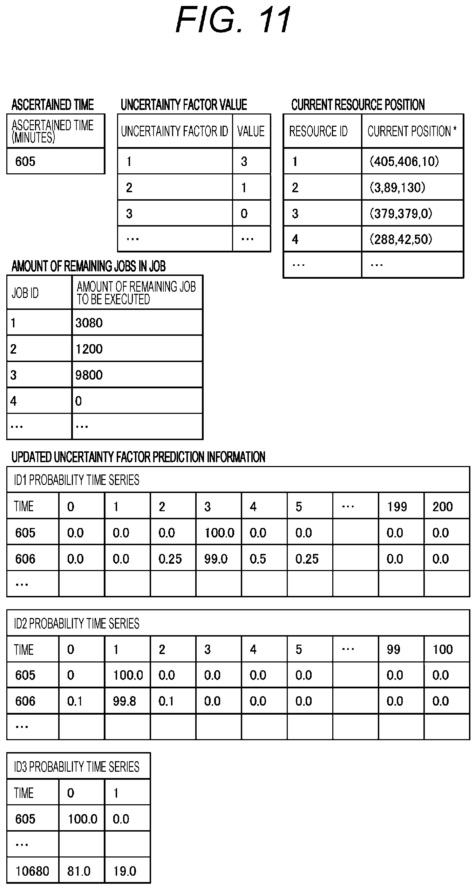

By contrast, if there is any new data that can be used in correcting the schedule, the processing unit 12 receives an input of new ascertained data that can be used in correcting the schedule (S107), and calculates a schedule of the resources for which a plan is to be prepared, using the input ascertained data (S103). The schedule may change, e.g., planting work is carried out only for XX ha because the availability of a person who is in charge of a job A has changed, or a job D that is harvesting is done YY ha more than that as scheduled because the weather has been good. The processing in steps S103 to S106 is then repeated. The ascertained data will be described later in detail with reference to FIG. 11.

As the resources are actually utilized in accordance with the schedule output in step S105, the number of remaining tasks becomes smaller, and the parameters of the uncertainty factors (such as weather or personnel) go through changes. It is possible to run simulations of these resource utilization and parameter changes using an algorithm on a system outside of the processing unit 12. The results of the simulations are then used in calculating the schedule (S103), and a new schedule of the resources is thus calculated.

In a conventional scheduling model, jobs to be processed are given as a predetermined set of jobs at the beginning. An importance is then placed on finishing all of such jobs within the shortest time possible or within a specified time, and no attention is paid to the timing at which the jobs are executed. By contrast, in this embodiment, given a set of jobs with a distribution of reward that is dependent on the time at which the jobs are processed, jobs resulting in higher reward (preferably, maximum reward) are selected. Furthermore, a schedule for processing the selected jobs is presented, and summary information resultant of running a simulation is also output. Furthermore, the schedule can be corrected by collecting newly ascertained external information, and outputs of the corrected schedule and summary information are also presented.

FIG. 4 is a diagram illustrating an example of job execution period information.

The job execution period information serves as a temporal constraint in job scheduling, and includes a start time and an end time. Jobs are then scheduled to start at this start time, and end by the end time.

FIG. 5 is a diagram illustrating an example of geographic information.

The geographic information is geographic information indicating the position at which a resource is utilized in a job, and is represented by a graph of nodes and edges, and includes a start point, an end point, and a distance. The start point is identification information of the node serving as a start point of an edge, and the end point is identification information of the node serving as an end point of the edge. The distance is the distance between the start point node and the end point node. The geographic information may also include the number of vertices representing the number of nodes.

FIG. 6 is a diagram illustrating an example of owned resource information.

The owned resource information is information about a resource owned by a business operator, and includes resource ID, processable job type, job execution speed, moving speed, and initial position. The resource ID is unique identification information of a resource owned by the business operator. The processable job type is a kind of job that can be processed by the resource, that is, the kind of the resource. Definitions such as 1 being a tractor and 2 being a drone are specified. The job execution speed is the maximum amount of tasks the resource can handle per unit time, and is determined by performance (e.g., output) of the resource. The moving speed is the distance by which the resource moves per unit time. The initial position is identification information of the point (node) where the resource is usually kept in storage or the resource is currently at. In the drawing, remarks are character information describing the processable job type in a manner human can understand.

FIG. 7 is a diagram illustrating an example of job information.

The job information is information of a job performed using a resource owned by the business operator, and includes job ID, vertex number, job type, task amount, dependent job ID, and temporal reward distribution. The job ID is unique identification information given to a job. The vertex number is identification information of the point (node) where the job is performed, and is information for positioning the job in a space. The job type is the kind of the job, that is, the kind of resource used in the job, and is defined following the same rule as the processable job type, which is specified in the owned resource information. The task amount is the amount of tasks required to complete the job. The dependent job ID is identification information of a job to be executed prior to the execution of this job. The temporal reward distribution is a temporal constraint given to the job, the temporal constraint being represented as a temporal change in the reward achieved by the job, and is represented as a pair of time and a reward value, as illustrated in the diagram.

Conventionally, temporal restrictions imposed on each job have been expressed as a time slot available and/or unavailable for the job. By contrast, in this embodiment, because a temporal restriction is represented as a graph obtained by performing linear interpolation to the points given by pairs of time and a reward value, a user can define a temporal constraint of a job flexibly and variously.

In this embodiment, the temporal constraint imposed on the execution of a job is represented as a temporal reward distribution, in a form of a graph obtained by performing linear interpolation to the points given by the pairs of time and a reward value. Because a job is scheduled in a time slot where the reward is high, the temporal constraint can be expressed variously using a temporal change in reward, and some patterns of such temporal constraint are illustrated in FIGS. 8A to 8C.
FIG. 8A: When a predetermined time slot is preferable but time slots before and after the preferable time slot are also acceptable, the reward is set high in the preferable time slot, and the reward set to the time slots before and after the preferable time slot is set in a manner decreasing, as the time shifts away from the preferable time slot, and the reward of the other time slots is set to zero.
FIG. 8B: When the morning is not acceptable but earlier time in the afternoon is more preferable, the reward is set to zero to the time prior to 0:00 PM, and the reward is set in a manner decreasing as the time passes from 0:00 PM and on. FIG. 8C: When a predetermined time slot is preferable but the time slots before and after the predetermined time slot are not acceptable, and the preference remains the same within the predetermined time slot, a constant high value reward is set to the predetermined time slot, and the reward is set to zero for the remaining time slots.

FIGS. 9 and 10 are diagrams illustrating an example of the a priori information for uncertainty factors.

The a priori information for an uncertainty factor is a set of patterns representing time-series changes in the uncertainty factor in the future, as probabilities, the time-series changes being resultant of variable factors such as those of the natural environment.

As illustrated in FIG. 9, the a priori information for uncertainty factors includes uncertainty factor ID, possible value, and degree of effect on job execution speed. The uncertainty factor ID is unique identification information given to an uncertainty factor. The possible value is identification information given to a pattern of change in the uncertainty factor, and the number of these possible values corresponds to the number of patterns of the change. The effect on the job execution speed specifies calculation formulas for classifying the degrees of effect that the uncertainty factor has on the job execution speed. When the job execution speed is not affected by the uncertainty factor at all, the effect on the job execution speed is kept blank. In the drawing, remarks are character information describing the uncertainty factor ID in a manner the human can understand.

As illustrated in FIG. 10, the probability distribution is defined, for each of the uncertainty factors, as increments of time elapsed (for example, in increments of one minute) from a start time, and probabilities (0% to 100%) at which an event is likely to occur, as specified in a pattern of the event. For example, the uncertainty factor of ID=1 is represented as time-series probabilities of the amount of precipitation, and represents a distribution of probabilities of precipitation being in amounts of 0 mm/h to 200 mm/h, respectively, per unit time, within the period from 1 minute to 10680 minutes. Similarly, the uncertainty factor of ID=2 is represented as time-series probabilities of the wind speed, and represents a distribution of probabilities of the wind speed being in increments of 0 m/s to 100 m/s, respectively, within the period from 1 minute to 10680 minutes. Furthermore, the uncertainty factor of ID=3 is represented as probabilities of a person in charge of a job 3 being unavailable, and represents a distribution of probabilities of the person being available and unavailable, respectively, within the period from 1 minute to 10680 minutes.

For example, because ID1 represents time-series changes in the probability pertinent to the amount of precipitation, each pattern specifies probabilities of raining or snowing by a predetermined amount. Furthermore, because ID2 represents time-series changes in the probability pertinent to the wind speed, each pattern specifies probabilities of wind blowing at a predetermined speed or higher. Furthermore, ID3 represents time-series changes in the probability of the person in charge of the job 3 being unavailable and the probability of the person being available.

FIG. 11 is a diagram illustrating an example of ascertained data input from outside.

The ascertained data is data used in schedule calculation, and has a similar configuration as the parameters input in step S101. The ascertained data includes ascertained time, uncertainty factor values, current resource positions, remaining amount of job tasks, and updated uncertainty factor prediction information. The ascertained time is time at which the ascertained data is observed. The uncertainty factor values represent the values of the respective uncertainty factors observed at the ascertained time, and represents conditions of weather, personnel, and the like. The current resource positions represent the positions of the resources at the ascertained time. For example, when a resource is on an edge, the current resource position may be expressed as (the identification information of the end point node 1 of the edge, the identification information of the end point node 2 facing the end point node 1 on the edge, the distance from the end point node 1). When the resource is at a node, the current resource position may be expressed as (the identification information of the node, the identification information of the node, 0). The remaining amount of job tasks represents the amount of incomplete tasks corresponding to each job at the ascertained time. The updated uncertainty factor prediction information represents prediction data such as that of weather and availability of personnel, and provides a list of prediction information on the probability (0% to 100%) at which each of the uncertainty factors will occur at each increment of the elapsed time (for example, in minutes) from the ascertained time, for every pattern.

FIG. 12 is a detailed flowchart of the job set optimization processing (S102).

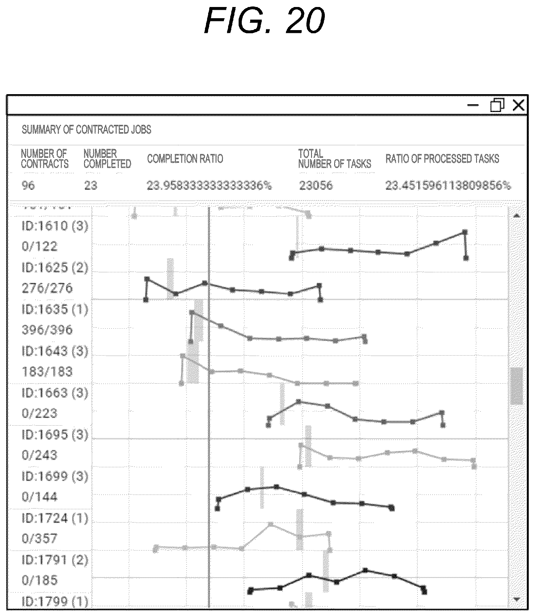

To begin with, the processing unit 12 receives inputs of the owned resource information, the a priori information for the uncertainty factors, and the whole job set, and selects the resource to be used in each of the jobs. The processing unit 12 then calculates a probability distribution of speed at which the job is executed by the resource, per increment of time, on the basis of coefficients determined for the a priori information for the respective uncertainty factors. Mapping data mapping the resource used in each of the jobs to the probability distribution of job execution speed is then generated (S1021). For example, the probability distribution of job execution speed illustrated in FIG. 20 is obtained. Note that, when the uncertainty factors have no effect on the job execution speed, the job execution speed probability distribution gives a constant value.

The processing unit 12 then calculates a cumulative sum of the probability distribution of job execution speed, for each of the resources to be used, and calculates a cumulative probability distribution function F(x) including the job execution speed as a variable x (S1022). The job execution speed probability distribution is given as discrete data, as illustrated in FIG. 20, for example. A time-series cumulative probability distribution F(x) of job execution speed can be calculated by taking the sum of the probabilities of job execution speed within the range from 0 to x, and, as a result, the distribution illustrated in FIG. 21 is obtained.

The processing unit 12 then generates data of a tentative job execution speed for each of the resources to be used, by using the acceptable risk level having been input (S1023). For example, the maximum x satisfying F(x) ≤ acceptable risk level may be determined as the tentative job execution speed. For example, assuming that the acceptable risk level is set to 0.7 in the cumulative probability distribution illustrated in FIG. 21, the maximum x satisfying F(x) ≤ acceptable risk level will be 56, so that the tentative job execution speed is determined as 56. However, x takes only values that are feasible as the job execution speed (in particular, when x is discrete). When there is no x satisfying F(x) ≤ acceptable risk level, the minimum value that is feasible as the job execution speed may be determined as x. The input acceptable risk level is represented as a numerical value ranging from 0 to 1, and is set to 1 when any risks are acceptable and set to 0 when none of the risks are acceptable. It is also possible to use an expectation value of the job execution speed calculated from the probability distribution of job execution speed, and to use the expectation value as the tentative job execution speed for the corresponding resource to be used. In this manner, it is possible to determine the tentative job execution speed even when no acceptable risk level is given.

The processing unit 12 then obtains the minimum value from the tentative job execution speeds of all of the resources, and sets the minimum speed as the job execution speed of the job (S1024).

The processing unit 12 then calculates a required job execution time, by dividing the amount of tasks required in each job, by the job execution speed (S1025).

The processing unit 12 then generates a tentative job set by excluding the jobs the calculation of which has resulted in a required job execution time longer than the job execution period having been input (S1026).

The processing unit 12 then solves, for each of the jobs not having been excluded, an optimization problem the objective function of which is the sum of products of the reward and the job execution speed in an interval [b, b + required job execution time] within the job execution period, with the job execution start time b being included as a variable, and sets the obtained interval as the job execution time slot, and the sum as an estimated amount of reward (S1027) . As a solver of the optimization problem, for example, a general-purpose non-linear optimization solver may be used.

The processing unit 12 then solves an optimization problem the objective function of which is the sum of the estimated amounts of reward, using the subset of jobs not having been excluded as a variable, given a limitation that all of the jobs included in the subset can be completed within the job execution period by going around from the current positions of the owned resources (S1028). For example, such a limitation can be given, by considering this optimization problem as a vehicle routing problem (VRP) for finding a route traversing across the jobs represented as vertices, and running simulated annealing that includes the job execution time and dependency as constraints. For the optimization problem, for example, simulated annealing that transitions to a neighborhood solution by deleting jobs and adding and swapping spatially nearby jobs may be used. By solving the optimization problem, a subset of jobs resulting in higher reward (preferably maximizing reward) is obtained.

The processing unit 12 then uses the obtained subset as the selected jobs (S1029). When none of the jobs are selectable, the set may be an empty set.

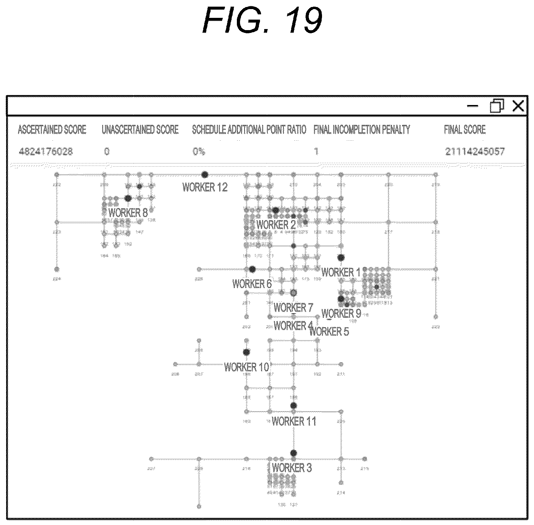

The set of selected jobs is then output and displayed on, for example, a spatial information screen illustrated in FIG. 19 and statistical information screen illustrated in FIG. 20 (S108).

In the job set optimization processing illustrated in FIG. 12, a subset of jobs is created on the basis of the a priori information of the uncertainty factors. In the example illustrated, the subset of jobs is determined by calculating the speeds from the probability distribution of the uncertainty factors. It is also possible to determine an appropriate subset by generating a variable following a probability given as a priori information, from a (pseudo) random number, running simulations of job execution a plurality of times, and evaluating the results. It is also possible to create a tentative job set by using a probability distribution calculated from the probability distribution of uncertainty factors (e.g., the probability distribution of job execution speed) or a (pseudo) random number following the probability distribution of the uncertainty factors itself. As described above, in the job set optimization processing illustrated in FIG. 12, a tentative job set is created taking the a priori information into consideration.

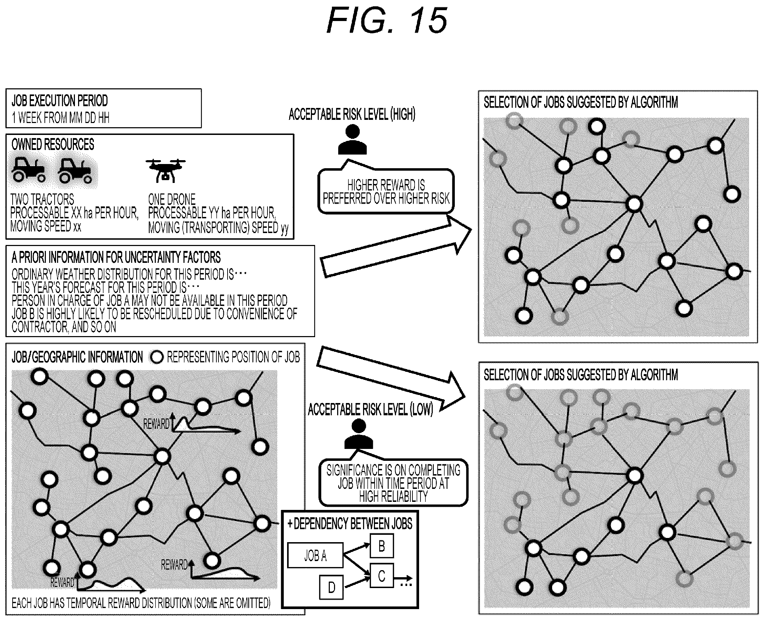

FIG. 15 is a diagram outlining the job set optimization processing (S102).

In the processing of optimizing the job set, different jobs are selected depending on the acceptable risk level entered by the user even if the input parameters (job execution period, owned resources, a priori information for uncertainty factors, job, geographic information) are the same.

FIG. 16 is a detailed flowchart of schedule calculation processing (S103).

To begin with, the processing unit 12 receives inputs of ascertained data corresponding to each increment of the time, the jobs selected in step S1029, and the owned resources. The ascertained data received herein is the data corresponding to the latest increment of time, and includes time, uncertainty factor values, current resource positions, remaining amount of job tasks, and updated uncertainty factor prediction information, as illustrated in FIG. 11. These pieces of data corresponding to the latest increment of time for which ascertained data is present is set as initial values. In other words, the current conditions of the uncertainty factors, the current positions of resources, the remaining amount of the job tasks, and the updated a priori information for the uncertainty factors, all corresponding to such a time increment, are set as initial values (S1031). Note that, even in the first run of execution, initial conditions are retained as the ascertained data.

Next, as an option, when an input of the uncertainty factor prediction information corresponding to the ascertained time is received, the processing unit 12 updates the uncertainty factor prediction information (S1032).

The processing unit 12 then receives an input of the job execution period, and runs internal calculations for the simulation, for the period from the time increment subsequent to the ascertained data to the end time of the job execution period, following the sequence of steps S1034 to S1037 (S1033) .

In step S1033, the processing unit 12 determines the time series data of uncertainty factors assuming that each of such uncertainty factors takes the most likely condition at each increment of time (S1034), and converts the time series uncertainty factor data into the time-series data of the job execution speeds, for each of the resources (S1035). The processing unit 12 then determines how each of the resources is to be moved and the job execution time by the resource, by solving the optimization problem the objective function of which is the sum of products of the reward × the job execution speed, with a constraint that all of the jobs are completed within the job execution period by going around the selected incomplete jobs, from current resource position (S1036). The processing unit 12 then establishes the determined movement and job execution corresponding to each of the resources as a schedule (S1037). For example, as a vehicle routing problem (VRP) that goes around the nodes where jobs are performed, it is possible to perform simulated annealing including the final job execution end time, as a penalty including the dependency as a constraint.

The processing unit 12 outputs a schedule in which the movement and the job execution time of each of the resources are arranged in the chronological order, and the time is arranged in the chronological order (S1038).

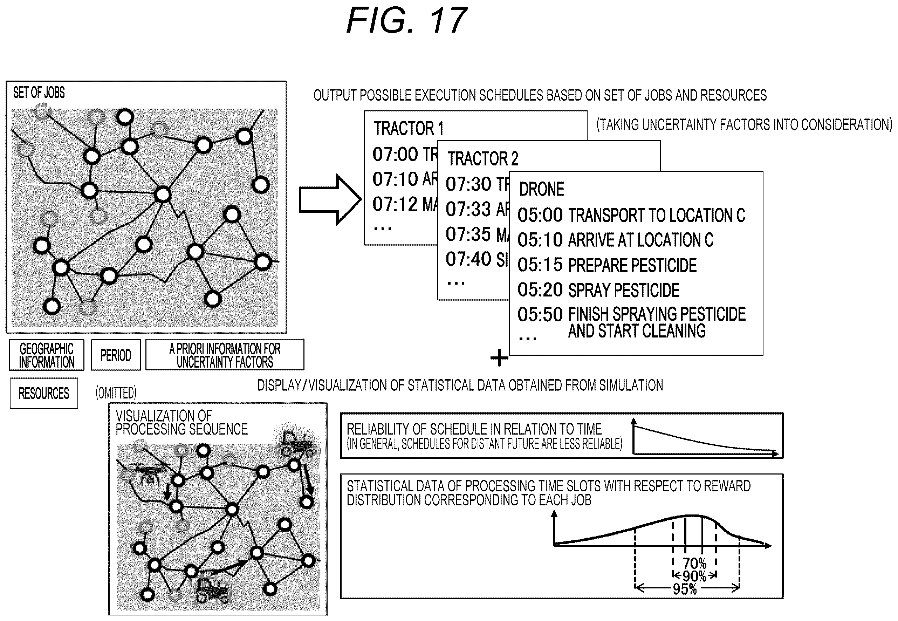

FIG. 17 is a diagram outlining the schedule calculation processing (S103) and simulations (S104).

In the schedule calculation processing, possible execution schedules on the basis of the set of jobs and resources are output. Furthermore, through the simulation (S104), the simulation result is visualized and the statistical data is displayed. For example, the sequence at which the jobs are processed, the reliability of a schedule with respect to the time, and statistical data of processing time slots with respect to the reward distribution corresponding to each job are displayed. In general, schedules further in the future are less reliable.

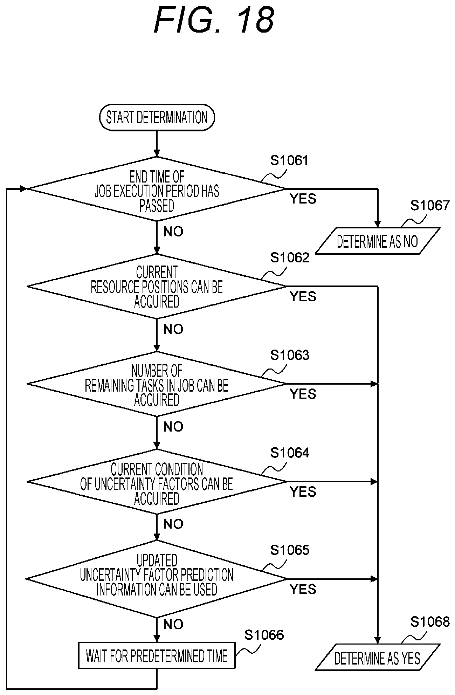

FIG. 18 is a flowchart of the presence-of-new-data determination processing (S106) according to the embodiment of the present invention.

In the presence-of-new-data determination processing in step S106, the processing unit 12 determines whether the end time of the job execution period has passed (S1061). If the end time of the job execution period has passed, it is determined that there is no new data that can be used in correcting the schedule (S1067).

By contrast, if the end time of the job execution period has not passed yet, it is determined whether the current positions of the resources can be acquired (S1062), whether the number of remaining tasks in the job can be acquired (S1063), whether the current condition of the uncertainty factors can be acquired (S1064), and whether the updated uncertainty factor prediction information can be used (S1065). If any one of these conditions is satisfied, it is determined that there is new data that can be used in correcting the schedule (S1068).

If all the determinations in steps S1061 to S1065 are NO, the process is kept standby for a predetermined time (S1066), then goes back to step S1061, and continues to make the determination.

Displayed pieces of summary information that is visualization of the simulation results will now be described with reference to Figs. 19 to 21. The summary information is generated by the output unit 13, and is output to and displayed on the display device 9 via the output interface 8.

FIG. 19 is a diagram illustrating a graph visualizing space information according to the embodiment of the present invention. The space information illustrated in FIG. 19 provides spatial visualization of the progress of the jobs, by plotting the positions and the time at which the jobs are executed and the allocations of the resources to respective locations and to respective increments of time elapsed, in a coordinate space in which the horizontal axis represents time and the vertical axis represents positions. With the graph visualizing the spatial information, the geographic information, the positions of the jobs, and the movement of the resources can be visually checked.

FIG. 20 is a diagram illustrating statistical information of the jobs and the amount of tasks, according to the embodiment of the present invention. The statistical information of the jobs and the amount of tasks illustrated in FIG. 20 provides visualization of temporal changes in the rewards corresponding to the respective jobs, by plotting the temporal changes in the reward corresponding to the respective jobs to a coordinate space in which the horizontal axis represents time and the vertical axis represents reward. In the drawing, the increments of time at which the jobs are scheduled are represented by vertical lines, respectively, at positions overlapping with the graphs of reward. It is also possible to display a plurality of different graphs of reward correspondingly to one job, the graphs being different depending on the time at which the job is scheduled. With the statistical information of the jobs and the amount of tasks, it is possible to visually check the timing at which the work is to be carried out, together with pieces of time-series data of reward corresponding to the respective jobs.

FIG. 21 is a diagram illustrating spatial timeline information of behaviors of the respective resources according to the embodiment of the present invention. The spatial timeline information of behaviors illustrated in FIG. 21 provides visualization of spatial and temporal conditions of resource operations, by displaying a schedule of jobs to be executed by the resources, in a coordinate space in which the horizontal axis represents time and the vertical axis represents resources. On the screen, when the cursor is placed on the time in which the resource is executing the job ("execute"), a popup window indicating the job name and detailed job information (such as the location where the job is executed and the job description) may be caused to appear, and the job may be highlighted in the space information illustrated in FIG. 19. When the cursor is moved to the time in which the resource is moving between jobs ("move"), a popup window indicating detailed information of the movement (e.g., the points of departure and destination, a travel time, and the like) may be caused to appear, and the movement may be highlighted in the space information illustrated in FIG. 19. With this spatial timeline information of the resource behaviors, a work plan can be checked visually.

As described above, according to the embodiment of the present invention, it is possible to perform preliminary estimation in a manner reflecting requests of job executors. With the job execution schedule spatially and temporally optimized, it is possible to improve the utilization rate of the owned resources. In particular, because the subset of jobs is determined using the temporal reward distribution that is flexibly expressed using the distribution along the time axis, it is possible to make a preliminary estimation in relation to the acceptance of job offers for the owned resources, by taking spatial and temporal conditions into consideration. Furthermore, by performing scheduling on the basis of the subset of jobs, it is possible to create a schedule better reflecting the requests. As a result, the utilization rate of the owned resources can be improved.

In addition, because the jobs are scheduled on the basis of the job information entered by the user, it is possible to generate a work plan flexibly reflecting requests of the user by creating a schedule on the basis of a subset of jobs that are created in accordance with the requests of the user.

In addition, because a schedule of job execution time for which the resources are used and the time for moving the resources are created, the job execution time and the travel time can be distinguished in the created schedule.

In addition, because the tentative job set is created in consideration of uncertainty factors including future time-series changes in weather information and human factor information, it is possible to generate a schedule by incorporating variations in the uncertainty factors.

Furthermore, because a tentative job set is created by selecting jobs from the range of acceptable risk level in relation to the uncertainty, and a job execution schedule is created in accordance with the strategy (e.g., stabilityoriented, reward-oriented) of the user, it is possible to generate a schedule reflecting the policy of the user concerning the risks.

Furthermore, a work plan can be visually checked from the summary information generated through statistical analysis of the status of the scheduled resources.

Note that the present invention is not limited to the embodiments described above, and includes various modifications and configurations equivalent thereto, within the gist of the appended claims. For example, the embodiment described above is a detailed description provided for the purpose of explaining the present invention in an easy-to-understand manner, and the present invention is not necessarily limited to the configurations having all the elements described above. A part of the configuration according to one embodiment may be replaced with the configuration according to another embodiment. Furthermore, the configuration according to another embodiment may be added to the configuration according to one embodiment. In addition, another configuration may be added to, deleted from, and replaced with a part of the configuration according to each of the embodiments.

In addition, a part or all of the above-described configurations, functions, processing units, processing means, and the like may be implemented as hardware by designing an integrated circuit, for example, or may be implemented as software using a processor interpreting and executing a program for implementing each function.

Information such as a program, a table, and a file for implementing each of the functions may be stored in a recording device such as a memory, a hard disk, and a solid state drive (SSD), or a recording medium such as an IC card, an SD card, and a digital versatile disk (DVD).

In addition, control lines and information lines presented are those considered to be necessary for the explanation, and are not necessarily the representations of all of the control lines and the information lines required in implementations. In reality, almost all of the configurations are considered to be connected to one another.

## Claims

1. A schedule formulation aiding system that formulates a schedule for executing a plurality of jobs using a resource,
the schedule formulation aiding system comprising a computer including an arithmetic device executing predetermined processing, and a storage device connected to the arithmetic device,
the schedule formulation aiding system comprising:
an input unit by which the arithmetic device receives information input to the schedule formulation aiding system;
a processing unit by which the arithmetic device executes scheduling of the plurality of jobs; and
an output unit configured to output a result of processing executed by the processing unit,
wherein
the input unit receives, for each of the plurality of jobs, an input of a job execution period serving as a temporal constraint in scheduling the jobs, geographic information indicating a position where the resource is used for the job, resource information related to a plurality of the resources for executing the job, and job information including a temporal reward distribution that is dependent on timing of job execution, and
the processing unit is configured to:
create a tentative job set enabling a job execution time required for execution of the jobs to fall within the job execution period, based on the job information and the resource information; and
determine a subset of jobs enabling greater reward to be achieved, based on the temporal reward distribution, the job execution period, the geographic information, and the resource information, and
the output unit is configured to output the determined subset of jobs.

2. The schedule formulation aiding system according to claim 1, wherein the processing unit is configured to solve an optimization problem an objective function of which is a sum of amounts of reward achieved by a subset of the tentative job set, and to determine a subset of jobs enabling higher reward to be achieved.

3. The schedule formulation aiding system according to claim 1, wherein the job information received by the input unit is a temporal reward distribution that is dependent on timing of job execution, entered by a user.

4. The schedule formulation aiding system according to claim 1, wherein the processing unit is configured to create, based on the resource information and the job information, a schedule of job execution time in which the resources are used and of movement of the resources, the job execution time being time being required for execution of the jobs included in the subset of jobs and configured to fall within the job execution period.

5. The schedule formulation aiding system according to claim 1, wherein
the input unit is configured to receive a priori information for an uncertainty factor including a future time-series change in weather information and human factor information, and
the processing unit is configured to create the tentative job set in consideration of the a priori information.

6. The schedule formulation aiding system according to claim 1, wherein
the input unit is configured to receive an acceptable risk level, and
the processing unit is configured to create the tentative job set by selecting a job within a range of the acceptable risk level.

7. The schedule formulation aiding system according to claim 1, further configured to output display data for displaying execution of a job and an allocation of a resource for each location and each increment of time elapsed, in a coordinate space in which a horizontal axis represents time and a vertical axis represents a position.

8. The schedule formulation aiding system according to claim 1, further configured to output display data for displaying a temporal change in reward corresponding to each job, in a coordinate space in which a horizontal axis represents time and a vertical axis represents reward.

9. The schedule formulation aiding system according to claim 1, further configured to output display data for displaying a job execution schedule including execution of a job by a resource and movement of the resource, in a coordinate space in which a horizontal axis represents time and a vertical axis represents a resource.

10. A schedule formulation aiding method by which a schedule formulation aiding system formulates a schedule for executing a plurality of jobs using a resource,
the schedule formulation aiding system including a computer including an arithmetic device executing predetermined processing, and a storage device connected to the arithmetic device,
the schedule formulation aiding method comprising:
an inputting step of causing the arithmetic device to receive, for each of the plurality of jobs, an input of a job execution period serving as a temporal constraint in scheduling the jobs, geographic information indicating a position where the resource is used for the job, resource information related to a plurality of the resources for executing the job, and job information including a temporal reward distribution that is dependent on timing of job execution, and
a processing step of causing the arithmetic device to:
create a tentative job set enabling a job execution time required for execution of the jobs to fall within the job execution period, based on the job information and the resource information; and
determine a subset of jobs enabling greater reward to be achieved, based on the temporal reward distribution, the job execution period, the geographic information, and the resource information, and
an outputting step of causing the arithmetic device to output the determined subset of jobs.
